# EUROPÄISCHE PATENTSCHRIFT

(11) **EP 2 831 491 B1**
(45) Veröffentlichungstag und Bekanntmachung des Hinweises auf die Patenterteilung: **25.05.2016**
(21) Anmeldenummer: 13704435.0
(22) Anmeldetag: 14.02.2013
(51) Int. Cl.: F17C 1/00

(54) **BETRIEBSVERFAHREN FÜR EINEN KRYO-DRUCKTANK**
OPERATING METHOD FOR A CRYOPRESSURE TANK
PROCÉDÉ POUR FAIRE FONCTIONNER UN RÉSERVOIR SOUS PRESSION CRYOGÉNIQUE

(30) Priorität: 26.03.2012 DE 102012204818
(43) Veröffentlichungstag der Anmeldung: 04.02.2015
(73) Patentinhaber: Bayerische Motoren Werke Aktiengesellschaft, 80809 München (DE)
(72) Erfinder: BRUNNER, Tobias, 85630 Grasbrunn (DE); TOLOSA, Manuel, 80333 München (DE)
(86) Internationale Anmeldenummer: PCT/EP2013/053020
(87) Internationale Veröffentlichungsnummer: WO 2013/143773

(56) Entgegenhaltungen:
- EP-B1- 2 217 845
- DE-A1-102007 011 530
- DE-A1-102007 011 742
- FR-A- 1 257 015
- US-A- 3 216 209
- US-A- 3 650 290

## Beschreibung

Die Erfindung betrifft ein Betriebsverfahren für einen Kryo-Drucktank, in dem kryogener Wasserstoff zur Versorgung eines Verbrauchers, insbesondere einer Brennstoffzelle eines Kraftfahrzeugs, unter überkritischem Druck bei 13 bar oder mehr gespeichert werden kann, wobei zum Ausgleich des aus der Entnahme von Wasserstoff aus dem Kryo-Drucktank resultierenden Druckabbaus über ein Regelventil einem im Kryo-Drucktank vorgesehenen Wärmetauscher entweder ein Wärmeträgermittel zugeführt wird oder keine Zufuhr von Wärmeträgermittel in den besagten Wärmetauscher erfolgt.

Zum Stand der Technik wird auf die EP 2 217 845 B1 verwiesen, in der mögliche Ausführungsformen eines Betriebsverfahrens nach dem Oberbegriff des Anspruchs 1 sowie die sog. Kryo-Druckspeicherung insbesondere von Wasserstoff beschrieben sind und wobei als weiterer Stand der Technik neben der US 6,708,502 B1 insbesondere die beiden deutschen Patentanmeldungen 10 2007 011 530.1 und 10 2007 011 742.8 zitiert sind. In diesen ist beschrieben, dass in einem sog. Kryo-Drucktank tiefkalter kryogener Wasserstoff bei überkritischem Druck, d.h. bei zumindest 13 bar absolut oder signifikant höheren Druck-Werten, nämlich bei 150 bar und mehr, gespeichert bzw. solcher Wasserstoff im Rahmen des Betankens mit überkritischem Druck in einen geeigneten Kryo-Drucktank eingefüllt werden kann, was signifikante Vorteile bietet. Ferner sei die US 3 650 290 als nächstliegender Stand der Technik genannt.

Um den Wasserstoff zur Versorgung des Verbrauchers mit einem gewissen Mindest-Druckniveau aus dem Kryo-Drucktank entnehmen zu können, wird dieses Mindest-Druckniveau durch einen gezielten Wärmeeintrag in den Kryo-Drucktank eingestellt bzw. eingehalten, der beim Betriebsverfahren nach der genannten EP 2 217 845 B1 dadurch bewerkstelligt wird, dass eine Teilmenge des aus dem Kryo-Drucktank entnommenen Wasserstoffs nach Erwärmung desselben in einem externen Wärmetauscher als Wärmeträgermittel durch einen im Kryo-Drucktank vorgesehenen (internen) Wärmetauscher hindurchgeführt wird, wobei in dieser Schrift weiterhin angegeben ist, wie ein solches Mindest-Druckniveau regelungstechnisch einfach sowie im Hinblick darauf, den Kryo-Drucktank soweit als möglich entleeren zu können, eingestellt werden kann.

Aus der US 3 650 290 ist es für einen Kryotank, in welchem Wasserstoff in überkritischem Zustand speicherbar ist, bekannt, dass zur Verhinderung einer Verflüssigung des Wasserstoffs im Zuge der Entnahme neben einer Temperaturanzeige druckbasierte Regelungsschritte vorgesehen sind, über die eine möglichst optimiert geringe Wärme in den Tank eingebracht wird.

Vorliegend soll für ein Betriebsverfahren nach dem Oberbegriff des Anspruchs 1, bei welchem abweichend von der genannten EP 2 217 845 B1 neben entnommenem Wasserstoff auch ein anderes (beliebiges) Wärmeträgermittel für die Zufuhr von Wärme in den Kryo-Drucktank verwendet werden kann, eine Verbesserung dahingehend aufgezeigt werden, dass der zum Ausgleich des aus der Entnahme von Wasserstoff resultierenden Druckabbaus getätigte Wärmeeintrag in den Kryo-Drucktank so gering als möglich gehalten wird (= Aufgabe der vorliegenden Erfindung).

Die Lösung dieser genannten Aufgabe ist dadurch gekennzeichnet, dass das Regelventil in Abhängigkeit vom Füllgrad des Kryo-Drucktanks nach unterschiedlichen Kriterien angesteuert wird, nämlich bei höherem Füllgrad, solange bei Entnahme von kryogenem Wasserstoff aus dem Kryo-Drucktank das Risiko einer Verflüssigung des im Kryo-Drucktank befindlichen Rest-Wasserstoffs besteht, solchermaßen, dass die Temperatur des im Tank befindlichen Wasserstoffs die kritische Temperatur nicht unterschreitet (dies wird weiteren auch als "Temperatur-Kriterium" bezeichnet), während bei geringem Füllgrad, wenn das Risiko einer Verflüssigung bei Entnahme von kryogenem Wasserstoff nicht mehr besteht und solange dies mit der im Kryo-Drucktank enthaltenen Restmenge von Wasserstoff möglich ist, der Druck im Kryo-Drucktank solchermaßen eingestellt wird, dass ein minimaler Druckwert, den der aus dem Kryo-Drucktank entnommene Wasserstoff aufweisen muss, um im Verbraucher ohne Funktionsbeschränkung desselben verwendet werden zu können, nicht unterschritten wird (dies wird weiteren auch als "Minimaldruck-Kriterium" bezeichnet).

Mit einem Wärmeeintrag wird - wie bereits geschildert - im Kryo-Drucktank ein Druck aufgebaut, mit dem die Versorgung des Verbrauchers sichergestellt werden kann. Ein möglichst geringer Wärmeeintrag in den Kryo-Drucktank ist insbesondere dann vorteilhaft, wenn nur eine sog. "einflutige" Betankung bzw. Befüllung desselben vorgesehen ist, d.h. dann, wenn es nicht möglich ist, den Kryo-Drucktank im Verlauf eines Betankungs-/Befüllungs-Vorgangs zunächst mit kaltem Wasserstoff zu spülen, welcher nach ausreichender Abkühlung des Kryo-Drucktanks vor der eigentlichen Befüllung desselben wieder aus dem Kryo-Drucktank abgeführt wird.

Bevorzugt wird jedenfalls dann, wenn die Wärmezufuhr in den Kryo-Drucktank mittels des Wärmeträgermittels alleinig zur Einhaltung des genannten Temperatur-Kriteriums, d.gh. zur Einhaltung eines Wasserstoff-Temperaturwertes von größer 33,18 Kelvin erfolgt, die Wärmezufuhr im Hinblick auf die Einhaltung dieses Temperaturwerts so weit als im Hinblick auf Totzeiten und Toleranzen möglich, minimiert. Bevorzugt wird somit die Temperatur des im Kryo-Drucktank befindlichen Wasserstoffs möglichst nahe der kritischen Temperatur (von 33,18 Kelvin) und somit beispielsweise in einem Bereich zwischen 34 Kelvin und 40 Kelvin gehalten, sobald oder solange mit Entnahme von kryogenem Wasserstoff aus dem Tank das Risiko einer Verflüssigung des im Tank verbleibenden Rest-Wasserstoffs besteht. Damit ist der Wärmeeintrag in den Kryo-Drucktank so gering als praktisch möglich gehalten, wobei ausdrücklich erwähnt sei, dass bei vollständig befülltem Kryo-Drucktank selbstverständlich ein derart hoher Druck (beispielsweise in der Größenordnung von 300 bar) sowie eine derart relativ hohe Temperatur (beispielsweise in der Größenordnung von 50 Kelvin) herrschen kann, dass mit Entnahme von kryogenem Wasserstoff zunächst kein Risiko einer Verflüssigung besteht, so dass dann überhaupt keine Regelung hinsichtlich der Temperatur und somit kein erfindungsgemäß gesteuerter Wärmeeintrag in den Kryo-Drucktank erfolgen muss. Vielmehr wird bei zumindest annähernd vollständig befülltem Tank zunächst nur die Einhaltung des genannten Temperatur-Kriteriums überwacht.

Vorliegend wird quasi eine sequentielle Temperatursteuerung und Drucksteuerung bzw. genauer -Regelung vorgeschlagen, wobei oberhalb eines gewissen Füllgrads des Kryo-Drucktanks, der bei vollständiger Befüllung bis zu einem Druck von beispielsweise 300 bar befüllt sein kann, eine einfach darzustellende Regelstrategie mit einer einfach messbaren Regelgröße, nämlich der Temperatur des im Kryo-Drucktank befindlichen kryogenen Wasserstoffs, verwendet wird. Dabei wird dafür Sorge getragen, dass diese Temperatur insbesondere in Verbindung mit einer Entnahme von Wasserstoff aus dem Kryo-Drucktank nicht unter diejenige des "kritischen Punkts" (= 33,18 Kelvin) fällt, womit der gewünschte überkritische Zustand des gespeicherten Wasserstoffs trotz Entnahme von Wasserstoff sicher erhalten bleibt. Es ist nämlich unerwünscht, dass der im Kryo-Drucktank im überkritischen Zustand gespeicherte Wasserstoff in einen Zustand im sog. Zweiphasengebiet übergeht, in dem sowohl flüssiger als auch gasförmiger Wasserstoff vorliegen kann. Der Vollständigkeit halber sei darauf hingewiesen, dass ohne Entnahme von Wasserstoff aus dem Kryo-Drucktank das Risiko einer Abkühlung des im Kryo-Drucktank befindlichen Wasserstoffs soweit, dass dieser anteilig oder vollständig in den unerwünschten flüssigen Aggregatzustand übergeht, aufgrund des unvermeidbaren minimalen kontinuierlichen Wärmeeintrags in den Kryo-Drucktank über dessen Tankwand nicht besteht.

Wenn der Füllgrad des Kryo-Drucktanks soweit abgesunken ist, dass mit weiterer Entnahme von Wasserstoff aus dem Tank die Gefahr einer Verflüssigung des im Tank befindlichen Wasserstoffs nicht mehr besteht, muss das besagte TemperaturKriterium nicht mehr berücksichtigt werden. Dann kann jedoch relativ bald mit weiterer Entnahme von Wasserstoff der Druck im Tank auf einen derart geringen Wert (beispielsweise in der Größenordnung von 2 bar fallen, dass damit eine ausreichende Versorgung des Verbrauchers nicht mehr gewährleistet wäre. Aus diesem Grund wird dann erfindungsgemäß zu einer Druck-Regelung gewechselt, dahingehend, dass der Druck im Tank einen minimalen Druckwert, den der aus dem Tank entnommene Wasserstoff aufweisen muss, um in Verbraucher ohne Funktionsbeeinträchtigung oder Funktionsbeschränkung desselben verwendet werden zu können, nicht unterschritten wird. Grundsätzlich ist dabei der Betriebszustand des Kryo-Drucktanks, bei dem erfindungsgemäß von der (beschriebenen) Temperatur-Regelung auf die (beschriebene) Druck-Regelung übergegangen wird, durch das Kriterium, ob insbesondere bei Entnahme von Wasserstoff aus dem Kryo-Drucktank das Risiko einer Verflüssigung des im Kryo-Drucktanks befindlichen Wasserstoffs besteht, ausreichend genau beschrieben. Bekanntlich ist dieses Risiko nur vorhanden, wenn die Temperatur des im Kryo-Drucktank gespeicherten Wasserstoffs unterhalb der kritischen Temperatur (von 33,18 Kelvin) und gleichzeitig der Druck unterhalb des kritischen Drucks (von 13 bar) liegt.

Im Rahmen der Einhaltung des genannten Temperatur-Kriteriums können abermals in Abhängigkeit vom Füllgrad des Tanks verschiedene Regelstrategien vorteilhaftsein. Es wurde bereits erwähnt, dass bei vollständig befülltem Kryo-Drucktank in diesem ein Druck von beispielsweise 300 bar und eine Temperatur von beispielsweise 50 Kelvin herrschen kann.

Wenn ausgehend von diesem Zustand mit Entnahme von Wasserstoff aus dem Tank zunächst eine Druckabsenkung und Abkühlung des im Tank verbleibenden Wasserstoffs erfolgt, so ist zunächst lediglich das genannte Temperatur-Kriterium relevant, wobei vorzugsweise der Wärmeeintrag in den Tank derart gering gehalten wird, dass die Temperatur von 40 K nicht überschritten wird. Gemäß dem bekannten Druck-Dichte-Diagramm des Wasserstoffs (insbesondere in der Umgebung des kritischen Punkts), welches ausschnittsweise in der beigefügten Fig.5 sowie in der genannten DE 10 2007 011 530 A1 als Fig.1 wiedergegeben ist, stellt sich dann im Tank ein Druck von zumindest 13 bar ein. Bei noch nahezu vollständig befülltem Kryo-Drucktank liegt der im Tank herrschende Druck jedoch noch deutlich höher, allerdings wird sich weiterer Verringerung des Füllgrades des Tanks der Druck im Tank diesem kritischen Druck von 13 bar (exakt 12,81 bar) annähern. Es empfiehlt sich daher, einem Füllstand in dieser Größenordnung von etwas mehr als 13 bar und einer Temperatur in der genannten Größenordnung von 33 K bis 40 K nur soweit bzw. soviel oder besser so wenig Wärme in den Tank eingebracht, dass der Druck im Kryo-Drucktank unter Einhaltung des genannten Temperatur-Kriteriums, welches zunächst weiterhin als vorrangige Regelgröße verwendet wird, im Wertebereich zwischen 13 bar und 15 bar liegt bzw. verbleibt.

Noch weiter minimiert werden kann der über dem Verbrauch einer vollständigen Tankfüllung quasi aufsummierte Wärmeeintrag in den Tank, wenn ab einem Betriebszustand oder Füllzustand des Tanks, bei dem der Druck im Tank unter Einhaltung des genannten Temperatur-Kriteriums auf Werte unterhalb des kritischen Drucks abgesenkt werden kann, dieser Druck des gespeicherten Wasserstoffs auch abgesenkt wird. In diesem Sinne kann dann, wenn sich mit einer Entnahme von Wasserstoff aus dem Tank bei Zufuhr von Wärme in den Tank im Hinblick auf eine Beibehaltung eines Drucks in der Größenordnung von 13 bar bis 15 bar sowie bei gleichzeitiger Einhaltung des genannten Temperatur-Kriteriums eine signifikante Erhöhung der Temperatur des im Tank befindlichen Wasserstoffs ergibt, der Druck im Tank auf einen niedrigeren Wert in der Größenordnung von 3 bar bis 7 bar geregelt werden, welcher für eine Versorgung einer Brennstoffzellen-Anlage oder eines nicht oder nur gering aufgeladenen Verbrennungsmotors immer noch ausreichend ist.

Mit weiterer Reduzierung des Füllgrades, d.h. nach weiterer Entnahme von Wasserstoff aus dem Tank, wenn dieser beispielsweise noch zu einem Drittel befüllt ist, könnte sich mit alleiniger Anwendung bzw. Einhaltung des genannten Temperatur-Kriteriums im Kryo-Drucktank schließlich ein Druck einstellen, der nicht nur unterhalb des Drucks im kritischen Punkt liegt, sondern bei weiterer Entnahme von Wasserstoff schnell auf Werte auch unterhalb von 3 bar abfallen kann. Dabei läge der gespeicherte Wasserstoff zwar wie gewünscht weiterhin im gasförmigen Zustand vor, jedoch wäre mit einem solch niedrigen Druck eine zuverlässige Versorgung eines Verbrauchers mit aus dem Kryo-Drucktank entnommenem Wasserstoff nicht mehr sichergestellt. Deshalb wird dann bei Entnahme von Wasserstoff aus dem Tank nur so viel Wärme in den Tank eingeführt, dass ein Druckwert in der Größenordnung von 3 bar bis 7 bar eingehalten wird, welcher für eine ausreichende Versorgung des Verbrauchers, insbesondere einer Brennstoffzellen-Anlage, benötigt wird. Hiermit ist der (grundsätzlich bereits weiter oben beschriebene) Zustand der reinen Druckregelung erreicht, in welchem das genannte Temperatur-Kriterium nicht mehr beachtet werden muss, da die Temperatur im Tank mit abnehmender Füllmenge und somit sinkender Dichte nicht mehr unter die kritische Temperatur von 33,18 K fallen kann. Vielmehr dient dann alleine das genannte Minimaldruck-Kriterium zur Regelung des Wärmeeintrags in den Kryo-Drucktank, wobei diese Druckregelung derart ausgelegt ist, dass die Regelgröße, nämlich der Druck des im Kryo-Drucktank enthaltenen Wasserstoffs, einen Minimalwert, der zur sicheren Versorgung eines Verbrauchers ohne Funktionsbeschränkung desselben benötigt wird, nicht unterschreitet. Wie bereits beschrieben kann dieser Minimalwert im Bereich von 3 bar bis 7 bar und bevorzugt in der Größenordnung von 5 bar (absolut) liegen, da damit abhängig von Verlusten eines Leitungssystems mit integriertem Reglern zwischen dem Kryo-Drucktank und einer Brennstoffzelle-Anlage (als beispielhafter Verbraucher) diese BrennstoffzellenAnlagen zuverlässig betrieben werden kann.

In weiteren vorteilhaften Ausführungsformen kann analog der genannten EP 2 217 845 B1 als Wärmeträgermittel aus dem Kryo-Drucktank entnommener und in einem Wärmetauscher erwärmter Wasserstoff verwendet und über eine von einer zum Verbraucher führenden Versorgungsleitung abzweigende Zweigleitung dem Wärmetauscher im Kryo-Drucktank zugeführt und nach Durchströmen desselben in die Versorgungsleitung stromab des Abzweigs der Zweigleitung eingeleitet werden. Dabei kann in der Versorgungsleitung stromab der genannten Abzweigung der Zweigleitung eine Druckregeleinheit vorgesehen sein, die sicherstellt, dass trotz stromauf der Druckregeleinheit durch das Schalten des im Oberbegriff des Anspruchs 1 genannten und die Größe des Wärmeeintrags in den Tank (durch Ansteuerung von einer elektronischen Steuereinheit) festlegenden Regelventils verursachter Änderungen des Drucks in der Versorgungsleitung eine kontinuierliche Versorgung des Verbrauchers mit Wasserstoff unter benötigtem Druck gewährleistet ist. Weiterhin kann das besagte Regelventil über eine die Taktzeiten eines üblichen Taktventils signifikant überschreitende Zeitspanne hinweg geschlossen oder geöffnet werden, um sowohl den Regelungsprozess einfach zu halten als auch die mechanische Beanspruchung des Regelventils gering zu halten.

Nach einer vorteilhaften Weiterbildung des erfindungsgemäßen Betriebsverfahrens kann die Abwärme einer Brennstoffzellenanlage als ein aus dem Tank versorgter Verbraucher dem genannten Wärmeträgermittel zumindest anteilig zugeführt werden, was für eine kryoadsorptive Speichervorrichtung für Wasserstoff beispielsweise aus der DE 10 2011 017 206 A1 bekannt ist. Vorliegend wird vorgeschlagen, zur Minimierung des Wärmeeintrags in den Kryo-Drucktank nur dann eine anteilige Wärmeabfuhr von den Brennstoffzellenanlage in den Tank durchzuführen, wenn dies zur Befriedigung eines höheren Kühlleistungsbedarfs der Brennstoffzellenanlage, der nicht vollständig durch deren eigentliches und wie üblich letztlich die Umgebungsluft als Temperatursenke verwendendes Kühlsystem gedeckt werden kann, notwendig ist. Dabei wird bedarfsabhängig nur solange über das Wärmeträgermittel eine Wärmeabfuhr aus der Brennstoffzellenanlage mit Wärmezufuhr in den Kryo-Drucktank durchgeführt, bis der im Tank befindliche Wasserstoff als Folge dieser Wärmezufuhr einen vorgegebenen Maximaldruck aufweist. Dieser vorgegebene Maximaldruck ist hinsichtlich des für die Betriebssicherheit des Tanks zulässigen Maximaldrucks ausgelegt.

Grundsätzlich ist mit den hier vorgeschlagenen Maßnahmen und insbesondere mit der im unabhängigen Anspruch 1 angegebenen Temperatur- und -Druck-Regelung gegenüber dem Stand der Technik ein signifikant geringerer Wärmeeintrag in den Kryo-Drucktank erzielbar, wie auch aus der weiteren Erläuterung zweier Ausführungsbeispiele hervorgeht. Die zugehörigen Figuren zeigen folgendes:
- Fig.1: zeigt einen, Kryo-Drucktank mit relevanter Peripherie, an dem eine Ausführungsform des erfindungsgemäßen Betriebsverfahrens durchführbar ist
- Fig.2: zeigt ein Diagramm, in dem jeweils über einem Befüllvorgang und einen sich daran anschließenden Entnahmeprozess hinweg über der auf der Abszisse aufgetragenen Masse des im Kryo-Drucktank nach Fig.1 befindlichen Wasserstoffs der Verlauf des auf der Ordinate aufgetragenen Drucks sowie der Temperatur des im Tank gespeicherten Wasserstoffs dargestellt ist
- Fig.3: zeigt in Ergänzung zu Fig.1 eine Brennstoffzellenanlage, deren Abwärme über ein Wärmeträgermittel anteilig dem Kryo-Drucktank zuführbar ist,
- Fig.4: zeigt für die Anlage nach Figur 3 einen beispielhaften Verlauf des Drucks des im Kryo-Drucktank befindlichen Wasserstoffs über dessen Masse im Laufe einer vollständigen Entnahme von Wasserstoff aus dem Tank.

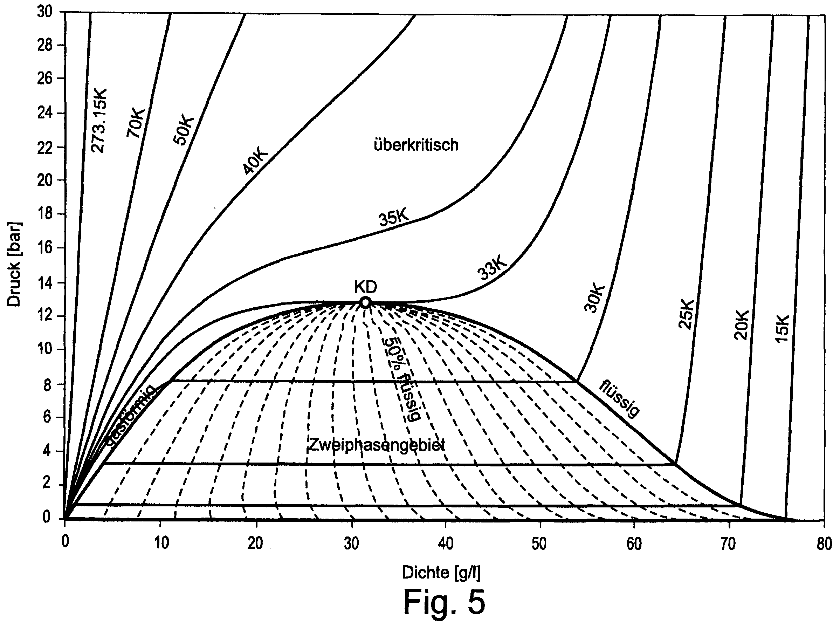

- Fig.5: zeigt das bekannte Druck-Dichte-Diagramm von Wasserstoff in der Umgebung des kritischen Punktes KD, auf das vorhergehend in der allgemeinen Beschreibung bereits eingegangen wurde.

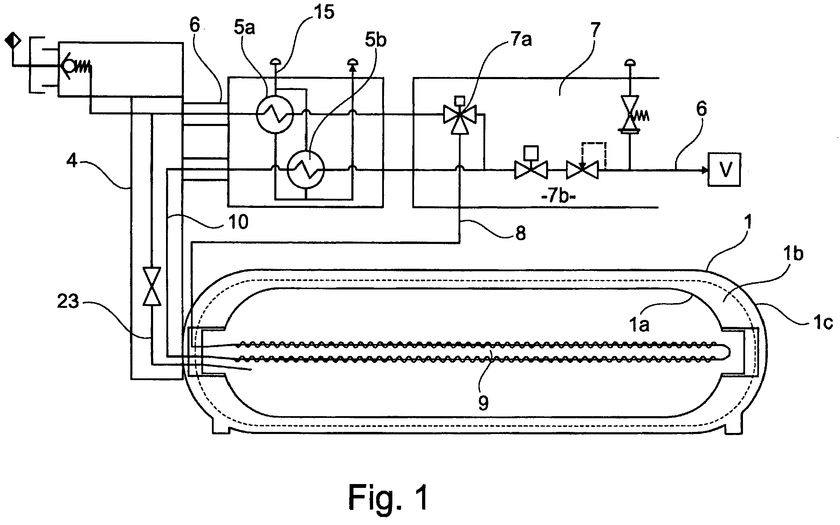

Zunächst auf Figur 1 Bezug nehmend ist hierin prinzipiell ein Kryo-Drucktank 1 inklusive seiner für das Verständnis der vorliegenden Erfindung erforderlichen Peripherie dargestellt. Im Kryo-Drucktank 1 (auch nur Tank 1 genannt) kann kryogener Wasserstoff zur Versorgung eines nicht näher dargestellten Verbrauchers V, beispielsweise einer Brennkraftmaschine und/oder einer Brennstoffzelle eines Kraftfahrzeugs, unter Absolutdruckwerten des Tank-Innendrucks in der Größenordnung von 150 bar oder mehr, zumindest jedoch unter überkritischem Druck bei 13 bar und mehr, gespeichert werden. Dieser Kryo-Drucktank 1 besteht aus einem druckfesten Innentank 1a, innerhalb dessen sich der kryogene Wasserstoff im überkritischen Zustand befindet, und ferner aus einer diesen umgebenden Isolationsschicht 1 b, in der im wesentlichen Vakuum vorliegt, sowie aus einer dieses Vakuum einschließenden Außenhülle 1c.

Über eine kombinierte und somit einflutige Befüll- und Entnahmeleitung 23 kann der Innentank 1a mit kryogenem Wasserstoff im überkritischem Zustand befüllt werden und es kann über diese Befüll-Entnahmeleitung 23, die in einer nur abstrakt dargestellten und für die vorliegende Erläuterung nicht wesentlichen Kryo-Ventileinheit 4 verläuft bzw. mündet, Wasserstoff aus dem Innentank 1a entnommen werden. Hierfür ist an die Ventileinheit 4 ein erster bzw. externer Wärmetauscher 5a angeschlossen, durch den einerseits ein erster Wärmeträgerkreislauf 15 und zweitens eine von der Ventileinheit 4 abgehende sich dabei an die BefüllEntnahmeleitung 23 anschließende Versorgungsleitung 6 geführt ist, die letztlich zum bereits genannten Verbraucher V führt. Über den Wärmetauscher 5a steht die Versorgungsleitung 6 mit dem ersten Wärmeträgerkreislauf 15 in wärmeübertragender Verbindung, so dass der in der Versorgungsleitung 6 geführte Wasserstoff im externen ersten Wärmetauscher 5a erwärmt wird.

Im Anschluss an den externen ersten Wärmetauscher 5a ist die Versorgungsleitung 6 in eine zweite Ventileinheit 7 geführt, durch welche die Versorgungsleitung 6 unter Passieren eines Regelventils 7a sowie einer Druckregeleinheit 7b hindurchgeführt ist, ehe sie zum Verbraucher V gelangt. Dabei zweigt vom Regelventil 7a eine Zweigleitung 8 ab, durch die aus dem Kryo-Drucktank 1 entnommener und im ersten (externen) Wärmetauscher 5a erwärmter Wasserstoff in einen zweiten, innerhalb des Innentanks 1a des Kryo-Drucktanks 1 vorgesehenen (internen) Wärmetauscher 9 eingeleitet wird. Nach Durchströmen dieses zweiten, innerhalb des Kryo-Drucktanks 1, genauer innerhalb von dessen Innentank 1a vorgesehenen Wärmetauschers 9 wird dieser Wasserstoff über eine Rückführleitung 10 in die Versorgungsleitung 6 stromab des Abzweigs der Zweigleitung 8 eingeleitet, wobei diese Rückführleitung 10 zuvor durch einen dem ersten (externen) Wärmetauscher 5a parallel geschalteten und vom gleichen Wärmeträgerkreislauf 15 versorgten dritten (externen) Wärmetauscher 5b hindurch geführt ist, in dem der im zweiten internen Wärmetauscher 9 abgekühlte Wasserstoff durch Wärmetausch mit dem genannten Wärmeträgerkreislauf 15 wieder erwärmt wird. Es fungiert also der durch die Zweigleitung 8 sowie den zweiten internen Wärmetauscher 9 und die Rückführleitung 10 geführte Wasserstoff als Wärmeträgermittel zur Erwärmung des im Kryo-Drucktank 1 gespeicherten Wasserstoffs. Dabei erfolgt die Steuerung bzw.

Regelung dieser Erwärmung durch die Zufuhr von besagtem Wärmeträgermittel bzw. Wasserstoff zum internen Wärmetauscher 9 und somit durch die Schaltstrategie des Regelventils 7a gesteuert bzw. geregelt, so wie dies der Figurenbeschreibung vorangehend ausführlich erläutert wurde.

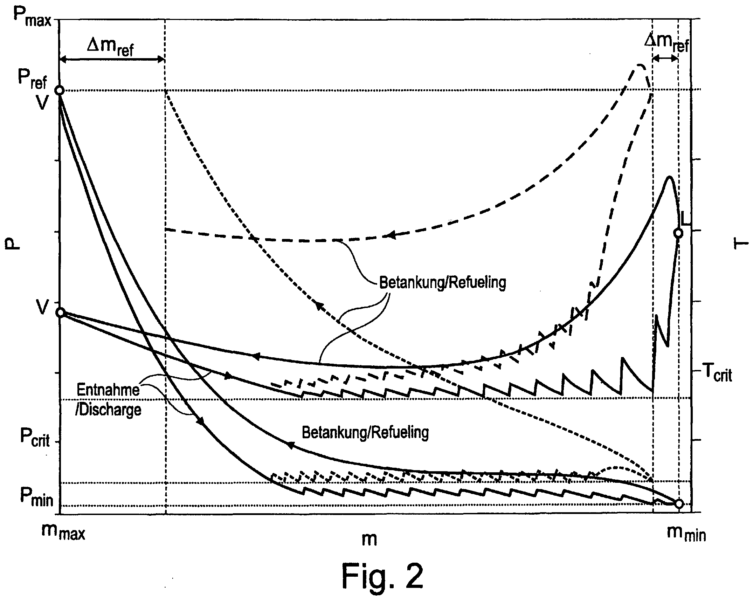

**Figur 2** zeigt ein Diagramm, in dem jeweils über einem Befüllvorgang und einen sich daran anschließenden Entnahmeprozess, im Rahmen derer der zuvor soweit als möglich entleerte Innentank 1 a (bzw. Kryo-Drucktank 1) zunächst vollständig befüllt und daraufhin soweit als möglich entleert wird, über der auf der Abszisse aufgetragenen Masse m des im Kryo-Drucktank 1 befindlichen Wasserstoffs der Verlauf des auf der linken Ordinate aufgetragenen Drucks p sowie der auf der rechten Ordinate aufgetragenen Temperatur T im Innentank 1a des Kryo-Drucktanks 1 aus Fig.1 dargestellt ist. Dabei sind die sich beim erfindungsgemäßen Verfahren einstellenden Verläufe von Druck p und Temperatur T in durchgezogen Linien dargestellt, während die Verläufe gemäß bisherigem Stand der Technik gemäß dem in der eingangs genannten EP 2 217 845 B1 beschriebenen Betriebsverfahren in denjenigen Bereichen, in denen sie vom jeweiligen Verlauf nach der vorliegenden Erfindung abweichen, gestrichelt dargestellt sind. Die den Druck p wiedergebenden Kurvenverläufe sind in einfachen Linien und die die Temperatur T wiedergebenden Kurvenverläufe in Doppel-Linien (zwei Linien nebeneinander) dargestellt. Die Zuordnung der einzelnen Kurvenabschnitte zur Befüllung (= Betankung) oder Entleerung (=Entnahme) ergibt sich zum einen durch diese hinzugefügten Worte und zum anderen aus der Richtung der in den Kurvenverläufen eingetragenen Dreiecks-Pfeile.

Der Zustand, in dem der Kryo-Drucktank 1 soweit als möglich entleert ist, ist für die Kurvenverläufe von Druck p und Temperatur T, die sich mit dem erfindungsgemäßen Verfahren einstellen, durch den Buchstaben "L" gekennzeichnet, und der Zustand, in dem der Kryo-Drucktank 1 soweit als möglich befüllt ist durch den Buchstaben "V". Ausgehend vom Zustand L werde der Kryo-Drucktank 1 zunächst vollständig mit kryogenem Wasserstoff in überkritischem Zustand durch Förderung mittels einer externen nicht dargestellten Pumpe befüllt, wobei die Masse m, der Druck p und Temperatur T gemäß der mit einem von "L" zu "V" hin gerichteten Dreiecks-Pfeil versehenen Kurve zunehmen. Dabei wird nur soviel Masse mₘₐₓ von Wasserstoff in den Innentank 1 a eingebracht, bis in diesem ein sog. Betankungsenddruck p_{ref} erreicht ist. Dieser Betankungsenddruck p_{ref} liegt um ein gewisses Maß niedriger als der maximal zulässige Druck pₘₐₓ im Innentank 1 a, der sich aufgrund des nicht vollständig vermeidbaren Wärmeeintrags aus der Umgebung über die Tankwand dann einstellen kann oder wird, wenn das Fahrzeug nach vollständigem Befüllen des Tanks 1 für einen längeren Zeitraum von bspw. einer Woche abgestellt wird.

Mit zeitlich späterer Entnahme von Wasserstoff, welche vorzugsweise ohne Fördervorrichtung alleinig aufgrund des Druckgefälles zwischen dem Druck im Innentank 1a und dem Druck im genannten Verbraucher V stattfinden kann, nehmen sowohl die Masse m als auch der Druck p und die Temperatur T im Innentank 1a des Kryo-Drucktanks 1 gemäß der mit einem von "V" zu "L" hin gerichteten Dreiecks-Pfeil versehenen Kurve ab. Dabei muss neben dem unvermeidbaren geringen Wärmeeintrag über die Tankwand solange kein zusätzlicher, mit einem Wärmeträgermittel und dem internen zweiten Wärmetauscher 9 (aus Fig.1) praktizierter Wärmeeintrag in den Innentank 1 a dargestellt werden, als kein Risiko einer Verflüssigung des im Tank verbleibenden Rest-Wasserstoffs besteht. Letzteres ist zunächst einmal solange der Fall, als die Temperatur T im Tank bzw. Innentank 1a nennenswert oberhalb der kritischen Temperatur T_{crlt} von 33,18 Kelvin und der Druck p im Tank oberhalb des Drucks p_{crit} im kritischen Punkt (= 13 bar) liegt.

Ehe jedoch mit weiterer Entnahme von Wasserstoff die Temperatur im Tank 1 diese kritischen Temperatur T_{crit} erreicht, wird zunächst erfindungsgemäß durch Wärmeeintrag in den Innentank 1a des Kryo-Drucktanks 1 die Temperatur T des im Tank 1 befindlichen Wasserstoffs solchermaßen eingestellt, dass diese kritische Temperatur T_{crit} nicht unterschritten wird. Hierfür wird, wie dies die ein "Sägezahn-Profil" darstellenden Abschnitte der Temperatur-Kurve und der Druck-Kurve zeigen, das Tankdruck-Regelventil 7a (aus Fig.1) über eine die Taktzeiten eines üblichen Taktventils signifikant überschreitende Zeitspanne hinweg geschlossen oder geöffnet, wobei die entsprechende Regelung des Öffnens und Schließens solchermaßen erfolgt, dass sich die Temperatur T in einem Bereich zwischen 34 Kelvin und 36 Kelvin bewegt. Vorteilhafterweise stellt sich dabei der Druck p des im Tank 1 befindlichen Wasserstoffs auf einen Wert in der Größenordnung von 13 bar bis 15 bar ein bzw. es kann die Einhaltung eines Druckwertes in diesem Bereich als weitere Regelgröße neben dem in diesem Zustand noch vorrangigen genannten Temperatur-Kriterium verwendet werden. Ein Wasserstoff-Druck in dieser Größenordnung ist für die zuverlässige Versorgung eines üblichen Verbrauchers, wie einer Brennstoffzelle oder eines nicht oder maximal gering aufgeladenen Verbrennungsmotors bei weitem ausreichend hoch, damit dieser Verbraucher ohne Beeinträchtigung seiner Funktion betrieben werden kann.

Nachdem der Kryo-Drucktank 1 soweit entleert ist, dass mit weiterer Entnahme von Wasserstoff praktisch kein Risiko einer Verflüssigung des im Tank 1 befindlichen Rest-Wasserstoffs besteht, was sich dadurch ausdrückt, dass bei im wesentlichen konstant geringfügig oberhalb von 13 bar liegendem Druck die Temperatur im Tank auf signifikant oberhalb von 33 K liegenden Werte zu steigen beginnt, wird auf die vor der Figurenbeschreibung erläuterte Druckregelung umgeschaltet, die zwar grundsätzlich neben der Einhaltung eines für die zuverlässige Versorgung des Verbrauchers erforderlichen minimalen Drucks pₘᵢₙ in der Größenordnung von bspw. 5 bar bis 7 bar als weiteres Kriterium die Einhaltung einer Minimal-Temperatur oberhalb der kritischen Temperatur (von 33,14 Kelvin) berücksichtigen kann, wobei jedoch aufgrund des Minimaldruckwerts pₘᵢₙ das Kriterium der kritischen Temperatur überhaupt nicht berücksichtigt werden muss; vielmehr wird letzteres mit den genannten Beispielswerten zwangsläufig eingehalten. Wie Figur 2 zeigt, kann die Temperatur T kurz vor Erreichen der minimal im Tank befindlichen Kraftstoff-Masse mₘᵢₙ relativ stark ansteigen, jedoch liegt auch dann die Temperatur T immer noch unter den gemäß dem gestrichelt dargestellten Kurvenverlauf nach dem Stand der Technik erzielbaren Werten und ist somit kälter und damit für eine nachfolgende Neu-Befüllung des Kryo-Drucktanks 1 günstiger.

Als Folge des im "entleerten" Zustand gegenüber dem Stand der Technik kälteren Tanks 1 kann mit dem erfindungsgemäßen Betriebsverfahren im Rahmen einer Wieder-Befüllung des Kryo-Drucktanks 1 eine größere Menge von kryogenem Wasserstoff unter überkritischem Druck eingebracht werden, wie aus der in der Fig.2 explizit dargestellten sog. Referenzmasse Δm_{ref} offensichtlich wird, und welche diejenige Massen-Differenz zwischen dem erfindungsgemäßen Betriebsverfahren und dem betriebsverfahren nach dem Stand der Technik darstellt, die sich bei gleichem Referenzdruck p_{ref} ausgehend von den verschiedenen Temperaturen T bei leerem Tank 1 ergibt. Vorteilhafterweise kann darüber hinaus mit dem erfindungsgemäßen Betriebsverfahren der Kryo-Drucktank 1 um ein größeres Maß entladen werden, wobei eine vollständige Entladung naturgemäß auch hier nicht möglich ist. Man erkennt jedoch in Fig.1 im Bereich der Punkte bzw. des Zustands "L" eine Differenzmasse Δm_{dis}, die gegenüber dem Stand der Technik zusätzlich aus dem Tank 1 entnehmbar ist, da der Minimaldruckwerts pₘᵢₙ nach dem erfindungsgemäßen Verfahren niedriger als beim Stand der Technik ist und somit die nicht aus dem Tank entnehmbare Masse sinkt.

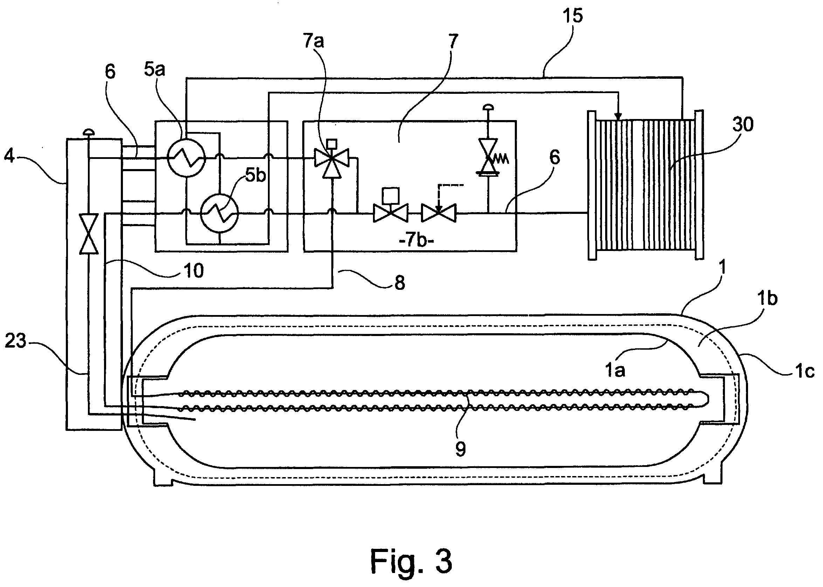

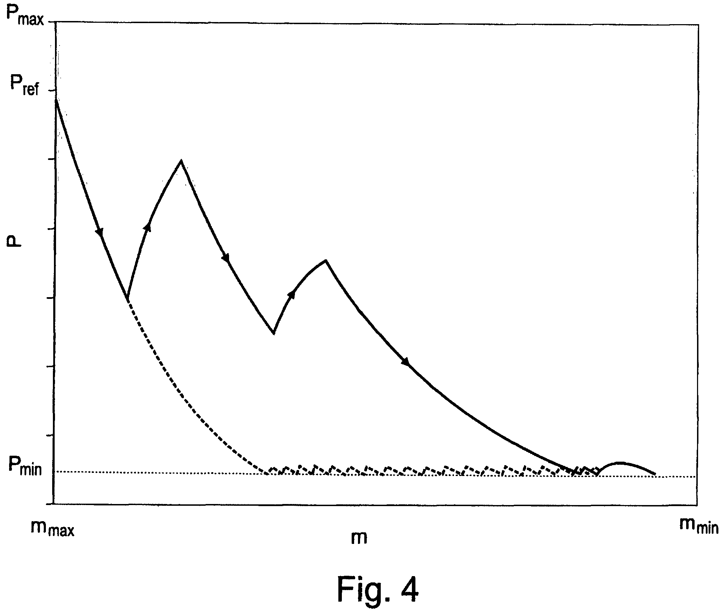

Eine Abwandlung bzw. Ergänzung des erfindungsgemäßen Verfahrens wird anhand der Figuren 3 und 4 erläutert. Fig.3 zeigt neben den zu Fig.1 bereits erläuterten Elementen abstrakt eine Brennstoffzellen-Anlage 30, die in den ersten Wärmeträgerkreislauf 15 eingebunden ist, so dass die beim Betrieb der Brennstoffzellenanlage 30 entstehende Abwärme zumindest anteilig an die Wärmetauscher 5a und 5b und über diese an den durch den zweiten, inneren Wärmetauscher 9 geführten Wasserstoff abführbar ist. Neben dem Wärmeträgerkreislauf 15 ist ein weiterer, die Umgebungsluft als Temperatursenke verwendender figürlich nicht dargestellter Wärmeträgerkreislauf zur Abfuhr der Betriebswärme der Brennstoffzellenanlage 30 vorgesehen, der vorrangig zur Kühlung der Brennstoffzellenanlage 30 verwendet wird. Eine Kühlung der Brennstoffzellenanlage 2 über den Wärmeträgerkreislauf 15 und somit unter Einbindung des Kältepotentials des im Innentank 1a des Kryo-Drucktanks 1 gespeicherten Wasserstoffs erfolgt mit Ausnahme derjenigen Betriebszustände des Kryo-Drucktanks 1, in denen gemäß vorhergehender Erläuterung eine Wärmezufuhr in den Innentank 1a erfolgen muss, um die Temperatur T des darin gespeicherten Wasserstoffs oberhalb der kritischen Temperatur von 33,14 Kelvin zu halten oder um den Druck p dieses Wasserstoffs oberhalb des genannten Minimaldrucks pₘᵢₙ zu halten, nur dann, wenn ein solch hoher Kühlleistungsbedarf in/an der Brennstoffzellenanlage 30 besteht, dass dieser nicht alleine durch den anderen figürlich nicht dargestellten und die Umgebungsluft als Temperatursenke verwendenden Wärmeträgerkreislauf abdeckt werden kann.

Wenn also zeitweise die Brennstoffzellenanlage 30 eine extrem hohe Kühlung benötigt, die durch den die Umgebungsluft als Temperatursenke nutzenden Wärmeträgerkreislauf nicht darstellbar ist, so kann unabhängig von der Temperatur T im Innentank 1a des Kryo-Drucktanks 1 solange das Kältepotential des in diesem Innentank1a befindlichen Wasserstoffs genutzt werden, als der Druck p im Innentank 1a als Folge dieser zusätzlichen Wärmezufuhr in den Innentank 1a nicht über einen zulässigen Maximaldruck, der vorzugsweise in der Höhe des sog. Referenzdrucks p_{ref} aus Fig.2 liegt, hinaus ansteigt. Dementsprechend wird bei solchem hohem Kühlleistungsbedarf der Brennstoffzellenanlage 30 das Regelventil 7a von einer geeigneten elektronischen Steuereinheit angesteuert, was durchaus sinnvoller sein kann, als wenn die Brennstoffzellenanlage 30 wegen Überhitzungsgefahr in einen Sonderbetriebsmodus mit erheblich reduzierter Leistungsabgabe gefahren werden müsste. Ein beispielhafter Verlauf des Drucks p über der Masse m des im Innentank 1a befindlichen Wasserstoffs ist für mehrere solche im Verlauf der vollständigen Entleerung des Tanks erforderliche intensive Kühlvorgänge der Brennstoffzellenanlage in Fig.4 mit durchgezogener Linie dargestellt. Diejenigen Kurvenabschnitte, die bei abnehmender Masse m eine Steigerung des Drucks p beschreiben, verdeutlichen einen kombinierten Entnahme- und Kühlbetrieb gemäß den vorangegangenen Erläuterungen. In Fig.4 ist ferner noch gestrichelt der Verlauf des Drucks p aus Fig.2 über der Masse m dargestellt und man erkennt beim Vergleich diesen beiden Kurven, dass mit dem intensiven Wärmeeintrag für die Kühlung der Brennstoffzellenanlage die ansonsten quasi getaktete (und sich im Sägezahnprofil in der Temperatur-Kurve von Fig.2 darstellende) Wärmezufuhr zur Einhaltung der Temperatur oberhalb der kritischen Temperatur bzw. des besagten Minimaldrucks zur Versorgung der Brennstoffzellen-Anlage nicht mehr benötigt wird.

## Patentansprüche

1. Betriebsverfahren für einen Kryo-Drucktank (1), in dem kryogener Wasserstoff zur Versorgung eines Verbrauchers, insbesondere einer Brennstoffzelle (30) eines Kraftfahrzeugs, unter überkritischem Druck bei 13 bar oder mehr gespeichert werden kann,
wobei zum Ausgleich des aus der Entnahme von Wasserstoff aus dem Kryo-Drucktank (1) resultierenden Druckabbaus über ein Regelventil (7a) einem im Kryo-Drucktank (1) vorgesehenen Wärmetauscher (9) entweder ein Wärmeträgermittel zugeführt wird oder keine Zufuhr von Wärmeträgermittel in den besagten Wärmetauscher (9) erfolgt,
**dadurch gekennzeichnet,**
**dass** das Regelventil (7a) in Abhängigkeit vom Füllgrad des Kryo-Drucktanks (1) nach unterschiedlichen Kriterien angesteuert wird,
nämlich bei höherem Füllgrad, solange bei Entnahme von kryogenem Wasserstoff aus dem Kryo-Drucktank (1) das Risiko einer Verflüssigung des im Kryo-Drucktank (1) befindlichen Rest-Wasserstoffs besteht, solchermaßen, dass die Temperatur des im Tank befindlichen Wasserstoffs die kritische Temperatur nicht unterschreitet,
während bei geringem Füllgrad, wenn das Risiko einer Verflüssigung bei Entnahme von kryogenem Wasserstoff nicht mehr besteht und solange dies mit der im Kryo-Drucktank (1) enthaltenen Restmenge von Wasserstoff möglich ist, der Druck im Kryo-Drucktank (1) solchermaßen eingestellt wird, dass ein minimaler Druckwert, den der aus dem Kryo-Drucktank (1) entnommene Wasserstoff aufweisen muss, um im Verbraucher ohne Funktionsbeschränkung desselben verwendet werden zu können, nicht unterschritten wird.

2. Betriebsverfahren nach Anspruch 1, **dadurch gekennzeichnet, dass** ausgehend von zumindest annähernd vollständig befülltem Tank mit fortlaufender Entnahme von Wasserstoff aus dem Tank bei Annäherung des im Tank herrschenden Drucks an den kritischen Druck von 12,81 bar neben dem genannten Temperatur-Kriterium als zunächst weiteres Regelkriterium ein Druckwert in der Größenordnung von 13 bar bis 15 bar eingestellt wird.

3. Betriebsverfahren nach Anspruch 1 oder 2, **dadurch gekennzeichnet, dass** dann, wenn sich mit einer Entnahme von Wasserstoff aus dem Tank und Zufuhr von Wärme in den Tank im Hinblick auf eine Beibehaltung eines Drucks in der Größenordnung von 13 bar bis 15 bar bei Berücksichtigung des genannten Temperatur-Kriteriums eine signifikante Temperaturerhöhung im Tank ergibt, der Druck im Tank auf einen niedrigeren Wert in der Größenordnung von 3 bar bis 7 bar geregelt wird.

4. Betriebsverfahren nach einem der vorangegangenen Ansprüche, wobei als Wärmeträgermittel aus dem Kryo-Drucktank (1) entnommener und in einem Wärmetauscher (5) erwärmter Wasserstoff über eine von einer zum Verbraucher führenden Versorgungsleitung (6) abzweigende Zweigleitung (8) dem Wärmetauscher (9) im Kryo-Drucktank (1) zugeführt und nach Durchströmen desselben in die Versorgungsleitung (6) stromab des Abzweigs der Zweigleitung (8) eingeleitet wird.

5. Betriebsverfahren nach einem der vorangegangenen Ansprüche, wobei das Regelventil (7a) über eine die Taktzeiten eines üblichen Taktventils signifikant überschreitende Zeitspanne hinweg geschlossen oder geöffnet wird und wobei in der Versorgungsleitung (6) stromab der Abzweigung der Zweigleitung (8) eine Druckregeleinheit (7b) vorgesehen ist, die sicherstellt, dass trotz stromauf der Druckregeleinheit (7b) durch das Schalten des Regelventils (7a) verursachter Änderungen des Drucks in der Versorgungsleitung (6) eine ausreichende und kontinuierliche Versorgung des Verbrauchers mit Wasserstoff unter benötigtem Druck gewährleistet ist.

6. Betriebsverfahren nach einem der vorangegangenen Ansprüche mit einer Brennstoffzellenanlage (30) als Verbraucher, deren Abwärme dem Wärmeträgermittel zumindest anteilig zugeführt wird, wenn insbesondere ein höherer Kühlleistungsbedarf der Brennstoffzellenanlage (30) nicht vollständig durch deren die Umgebungsluft als Temperatursenke verwendendes Kühlsystem gedeckt werden kann, wobei in Abhängigkeit vom aktuellen Kühlleistungsbedarf solange über das Wärmeträgermittel eine Wärmeabfuhr aus der Brennstoffzellenanlage (30) mit Wärmezufuhr in den Kryo-Drucktank (1) durchgeführt wird, bis der im Kryo-Drucktank (1) befindliche Wasserstoff einen vorgegebenen Maximaldruck (p_{ref}) erreicht hat.

## Claims

1. An operating method for a cryogenic pressure tank (1) in which cryogenic hydrogen can be stored under supercritical pressure at 13 bar or more to supply a consumer, more especially a fuel cell (30) of a motor vehicle,
wherein to compensate for the reduction in pressure resulting from the removal of hydrogen from the cryogenic pressure tank (1), either a heat transfer medium is supplied to a heat exchanger (9) provided in the cryogenic pressure tank (1) via a control valve (7a), or a heat transfer medium is not supplied into said heat exchanger (9),
**characterised in that** the control valve (7a) is activated subject to the filling level of the cryogenic pressure tank (1) according to different criteria,
namely when there is a relatively high filling level, as long as there is a risk of the residual hydrogen in the cryogenic pressure tank (1) liquefying during removal of cryogenic hydrogen from the cryogenic pressure tank (1) such that the temperature of the hydrogen in the tank does not fall below the critical temperature,
while when there is a low filling level, if there is no longer a liquefaction risk during the removal of cryogenic hydrogen and as long as this is possible with the residual amount of hydrogen contained in the cryogenic pressure tank (1), the pressure in the cryogenic pressure tank (1) is adjusted such that it does not fall below a minimum pressure value which the hydrogen removed from the cryogenic pressure tank (1) must have such that it can be used in the consumer without restricting the function thereof.

2. An operating method according to claim 1, **characterised in that** based on an at least almost completely full tank with a continuous removal of hydrogen from the tank, while the pressure prevailing in the tank approaches the critical pressure of 12.81 bar, a pressure value of the order of 13 bar to 15 bar is set as an initially further control criterion in addition to the mentioned temperature criterion.

3. An operating method according to claim 1 or claim 2, **characterised in that** if the temperature increases significantly in the tank, with the removal of hydrogen from the tank and with the supply of heat into the tank in view of maintaining a pressure of the order of 13 bar to 15 bar while bearing in mind the mentioned temperature criterion, the pressure in the tank is adjusted to a lower value of the order of 3 bar to 7 bar.

4. An operating method according to any one of the preceding claims, wherein hydrogen which is removed from the cryogenic pressure tank (1) and is heated in a heat exchanger (5) as the heat transfer medium is supplied to the heat exchanger (9) in the cryogenic pressure tank (1) by a branch line (8) branching off from supply line (6) leading to the consumer and after flowing through the heat exchanger, is introduced into the supply line (6) downstream of the branching-off point of the branch line (8).

5. An operating method according to any one of the preceding claims, wherein the control valve (7a) is closed or opened over a period of time which significantly exceeds the cycle times of a conventional cycle valve and wherein provided in the supply line (6) downstream of the branching-off point of the branch line (8) is a pressure control unit (7b) which ensures that the consumer is supplied adequately and continuously with hydrogen under the requisite pressure in spite of pressure changes in the supply line (6) which are caused by the switching of the control valve (7a) upstream of the pressure control unit (7b).

6. An operating method according to any one of the preceding claims, with a fuel cell system (30) as the consumer, at least a proportion of the waste heat of which is supplied to the heat transfer medium if more especially a relatively high cooling capacity requirement of the fuel cell system (30) cannot be fully met by the cooling system thereof which uses the ambient air as a temperature sink, wherein subject to the current cooling capacity requirement, heat is removed via the heat transfer medium from the fuel cell system (30), with the supply of heat into the cryogenic pressure tank (1) until the hydrogen in the cryogenic pressure tank (1) has reached a predetermined maximum pressure (p_{ref}).

## Revendications

1. Procédé de gestion d'un réservoir sous pression cryogénique (1) dans lequel peut être accumulé de l'hydrogène cryogénique pour l'alimentation d'un consommateur, en particulier d'une cellule électrochimique (30) d'un véhicule, sous une pression sur-critique de 13 bars ou plus,
selon lequel pour permettre la compensation de la chute de pression résultant du prélèvement d'hydrogène dans le réservoir sous pression cryogénique (1), par l'intermédiaire d'une soupape de réglage (7a), soit on introduit un fluide caloporteur dans un échangeur de chaleur (9) monté dans le réservoir sous pression cryogénique (1) soit on n'effectue aucune introduction de fluide caloporteur dans cet échangeur de chaleur (9),
**caractérisé en ce qu'**
on commande la soupape de réglage (7a) en fonction du niveau de remplissage du réservoir sous pression cryogénique (1) selon différents critères,
à savoir, dans le cas d'un niveau de remplissage élevé, tant que, lors du prélèvement d'hydrogène cryogénique dans le réservoir sous pression cryogénique (1) il existe un risque de liquéfaction de l'hydrogène résiduel se trouvant dans le réservoir sous pression cryogénique (1), de sorte que la température de l'hydrogène se trouvant dans le réservoir ne devienne pas inférieure à la température critique, et dans le cas d'un niveau de remplissage plus faible, lorsque le risque d'une liquéfaction lors du prélèvement d'hydrogène cryogénique n'existe plus, et aussi longtemps que ceci est possible avec la quantité résiduelle d'hydrogène renfermée dans le réservoir sous pression cryogénique (1) la pression dans le réservoir cryogénique (1) est réglée de façon à ne pas dépasser par le bas une valeur de pression minimum que doit présenter l'hydrogène prélevé dans réservoir sous pression cryogénique (1) pour pouvoir être utilisé au niveau du consommateur sans limitation du fonctionnement de celui-ci.

2. Procédé de gestion conforme à la revendication 1,
**caractérisé en ce qu'**
en considérant un réservoir au moins approximativement totalement rempli avec un prélèvement continu d'hydrogène dans le réservoir, lorsque la pression régnant dans le réservoir s'approche de la pression critique de 12,81 bar, outre le critère de température susmentionné, on règle en tant qu'autre critère de régulation une valeur de pression de l'ordre de grandeur de 13 bars à 15 bars.

3. Procédé de gestion conforme à l'une des revendications 1 et 2, **caractérisé en ce qu'**
en présence d'un prélèvement d'hydrogène dans le réservoir et d'un transfert de chaleur dans le réservoir, compte tenu d'un maintien d'une pression de l'ordre de grandeur de 13 bars à 15 bars, et en prenant en considération le critère de température susmentionné, il se produit une augmentation de la température significative dans le réservoir, on règle la pression dans le réservoir à une valeur plus faible, de l'ordre de grandeur de 3 bars à 7 bars.

4. Procédé de gestion conforme à l'une des revendications précédentes, **caractérisé en ce qu'**
en tant que fluide caloporteur de l'hydrogène prélevé dans le réservoir sous pression cryogénique (1) et chauffé dans un échangeur de chaleur (5) est transféré par une conduite de dérivation (8) monté en dérivation sur une conduite d'alimentation (6) conduisant au consommateur dans l'échangeur de chaleur (9) monté dans le réservoir sous pression cryogénique (1), et après passage dans celui-ci, est introduit dans la conduite d'alimentation (6) en aval de la dérivation de la conduite de dérivation (8).

5. Procédé de gestion conforme à l'une des revendications précédentes, selon lequel la soupape de réglage (7a) est fermée ou ouverte pendant un intervalle de temps dépassant de manière significative les durées de cycle d'une soupape de cadencement classique, et il est prévu dans la conduite d'alimentation (6) en aval de la dérivation de la conduite de dérivation (8) une unité de réglage de la pression (7b) qui garantit que malgré les variations de pression dans la conduite d'alimentation (6) provoquées en amont de l'unité de régulation de pression (7b) par la commutation de la soupape de réglage (7a), une alimentation suffisante et continue du consommateur par de l'hydrogène sous la pression nécessaire soit garantie.

6. Procédé de gestion conforme à l'une des revendications précédentes, comprenant une installation de cellule électrochimique (30) en tant que consommateur, dont la chaleur perdue est transférée au moins en partie au fluide caloporteur, lorsque, en particulier une demande en puissance frigorifique plus élevée de l'installation de cellule électrochimique (30) ne peut pas être totalement couverte par son système de refroidissement utilisant l'air environnant en tant que moyen d'abaissement de la température, selon lequel, en fonction de la demande de puissance frigorifique actuelle, on effectue par l'intermédiaire du fluide caloporteur une extraction de chaleur de l'installation de cellule électrochimique (30) et une introduction de chaleur dans le réservoir sous pression cryogénique (1) jusqu'à ce que l'hydrogène renfermé dans le réservoir cryogénique (1) ait atteint une pression maximum prédéfinie (p_{ref}).
